# EUROPEAN PATENT APPLICATION

(11) **EP 3 127 870 A1**
(43) Date of publication of application: **08.02.2017**
(21) Application number: 15773944.2
(22) Date of filing: 25.03.2015
(51) Int. Cl.: C02F 1/44, C02F 103/08

(54) **SEAWATER DESALINATION DEVICE, SEAWATER DESALINATION METHOD AND POTION CLEANING METHOD**

(30) Priority: 31.03.2014 CN 201410126999; 23.03.2015 CN 201520165169 U
(71) Applicant: Romer Environmental Protection (Shenzhen) Co., Ltd., Shenzhen, Guandong 518000 (CN)
(72) Inventor: WANG, Guilin, Shenzhen, Guangdong 518000 (CN); DONG, Wanzhang, Shenzhen, Guangdong 518000 (CN)
(74) Representative: Hryszkiewicz, Danuta
(86) International application number: PCT/CN2015/075063
(87) International publication number: WO 2015/149643

(57) **Abstract**

The present invention relates to a seawater desalination device, a seawater desalination method and a potion cleaning method. The seawater desalination device comprises a seawater introducing and filtering device and a seawater reverse osmosis filtering device. A first control valve is arranged between the filtering device after the introduction of seawater and the seawater reverse osmosis filtering device; and a second control valve is arranged at the end of pipeline of the seawater reverse osmosis filtering device. The seawater desalination device further comprises a control circuit. The seawater introducing and filtering device is consisted of a seawater inlet valve, a seawater pump and a filter which are communicated in turn via pipeline; the seawater reverse osmosis filtering device is consisted of the first control valve, a high-pressure pump, a reverse osmosis membrane group, a pressure regulating valve, the second control valve and a clean water tank which are communicated in turn via pipeline. By adopting the above structure, the seawater desalination device, the seawater desalination method and the potion cleaning method are controlled by a variety of combination of manual control and electronic control. And, seawater desalination stop cleaning step and potion cleaning step are reduced, the structure is simplified, and the efficiency is improved.

## Description

The invention relates to the technical field of the seawater desalination, and particularly to a seawater desalination device having control valves, a desalination method using the same, and a cleaning method thereof using a detergent.

Currently, in the field of seawater desalination, technique for preparing freshwater generally includes: preliminary precise filtration, pressurizing the seawater by a high pressure pump, and preparation of the freshwater using a reverse osmosis membrane. However, when the high-pressure pump stops working, the seawater remaining in the high pressure pump and reverse osmosis membrane cannot be discharged, which may cause fungal contamination to the high pressure pump and the reverse osmosis membrane after a long time accumulation. In addition, when the reverse osmosis membrane reaches its operating limit, the preparation of the freshwater cannot be continued until the reverse osmosis membrane is cleaned by a detergent. In view of this, it is urgent to design an easily controllable seawater desalination device and conveniently operable seawater desalination method and cleaning method.

It is one objective of the invention to provide a seawater desalination device having two-way integrated control valves, a desalination method using the same and a cleaning method thereof using a detergent. It is another objective to provide a seawater desalination device having two-position three-way solenoid valves, a desalination method using the same and a cleaning method thereof using a detergent, in which, the two-way integrated control valves are substituted by the two-position three-way solenoid valves, the production cost and the fault rate of the system are reduced.

A first technical solution of the method is to provide a seawater desalination device. The seawater desalination device comprises: a seawater introducing and filtering device and a seawater reverse osmosis filtering device. A first control valve is arranged between the seawater introducing and filtering device and the seawater reverse osmosis filtering device. A second control valve is disposed at a terminal pipe of the seawater reverse osmosis filtering device. The seawater desalination device further comprises a control circuit.

Preferably, the seawater introducing and filtering device comprises a seawater inlet valve, a seawater pump, and a filter assembly connected in that order via pipelines. The seawater reverse osmosis filtering device comprises a first control valve, a high pressure pump, a reverse osmosis membrane assembly, a pressure regulating valve, a second control valve, and a purge water tank connected in that order via pipelines. One end of the seawater inlet valve of the seawater introducing and filtering device is connected to a seawater inlet, and the other end of the seawater inlet valve is connected to the seawater pump. An outlet end of the seawater pump is connected to the filter assembly, and an outlet of the filter assembly is connected to the first control valve. The seawater after being filtered by the seawater introducing and filtering device is introduced to the high pressure pump via the first control valve, then to the reverse osmosis membrane assembly via a water inlet thereof for filtration. A freshwater produced from the filtration is discharged from a freshwater outlet of the reverse osmosis membrane assembly in two paths. One path of the freshwater passes through a freshwater outlet valve and is discharged for use, and the other path of the freshwater passes through a liquid level valve and reaches a purge water tank. A concentrated seawater produced from the filtration passes through the pressure regulating valve and discharged via the second control valve; and the purge water tank is connected to a water inlet of the high pressure pump.

Preferably, a first inlet of the first control valve communicates with an end of the seawater introducing and filtering device. A second inlet of the first control valve communicates with an output pipe of a purge water tank of the seawater reverse osmosis filtering device. An outlet of the first control valve communicates with an inlet of a high pressure pump of the seawater reverse osmosis filtering device.

Preferably, the first control valve is formed by a first three-way solenoid valve. A first inlet of the first three-way solenoid valve communicates with the end of the seawater introducing and filtering device. A second inlet of the first three-way solenoid valve communicates with the output pipe of the purge water tank of the seawater reverse osmosis filtering device. An outlet of the first three-way solenoid valve communicates with the inlet of the high pressure pump of the seawater reverse osmosis filtering device.

Preferably, the first control valve is a first two-way integrated control valve formed by a water inlet valve and a purge valve. A first fluid channel is arranged in the water inlet valve, and a second fluid channel is arranged in the purge valve. The first fluid channel and the second fluid channel cooperate with a valve core rod by synchronous rotation. A contact is arranged on the valve core rod corresponding to a first contact switch and a second contact switch of different positions. The first contact switch and a switch of the high pressure pump are in electric connection to form a first electrifying switch circuit. The second contact switch, a time controller, and the switch of the high pressure pump are in electric connection and form a second electrifying switch circuit. When rotating the valve core rod to a first set position, the first fluid channel is in an open state while the second fluid channel is in a closed state, and the contact triggers the first contact switch to connect the first electrifying switch circuit. When rotating the valve core rod to a second set position, the second fluid channel is in the open state while the first fluid channel is in the closed state, and the contact triggers the second contact switch to connect the second electrifying switch circuit.

Preferably, an inlet of the second control valve communicates with a pressure regulating valve of the seawater reverse osmosis filtering device. A first outlet of the second control valve communicates with a concentrated water outlet of the seawater reverse osmosis filtering device. A second outlet of the second control valve communicates with an inlet of a purge water tank of the seawater reverse osmosis filtering device.

Preferably, the second control valve is a second three-way solenoid valve. An inlet of the second three-way solenoid valve communicates with the pressure regulating valve of the seawater reverse osmosis filtering device. A first outlet of the second three-way solenoid valve communicates with the concentrated water outlet of the seawater reverse osmosis filtering device. A second outlet of the second three-way solenoid valve communicates with the inlet of the purge water tank of the seawater reverse osmosis filtering device.

Preferably, the second control valve is a second two-way integrated control valve formed by a reflux valve and a water outlet valve. The reflux valve is arranged behind the pressure regulating valve and communicates with the purge water tank; a third fluid channel is arranged in the water outlet valve, and a fourth fluid channel is arranged in the reflux valve. The third fluid channel and the fourth fluid channel cooperate with a valve core rod by synchronous rotation. A contact is arranged on the valve core rod corresponding to a third contact switch and a fourth contact switch of different positions. The third contact switch, a time controller, and a switch of the high pressure pump are in electric connection and form a third electrifying switch circuit. The fourth contact switch, the time controller, and the switch of the high pressure pump are in electric connection and form a fourth electrifying switch circuit. When rotating the valve core rod to a third set position, the third fluid channel is in an open state while the fourth fluid channel is in a closed state, and the contact triggers the third contact switch to connect the third electrifying switch circuit. When rotating the valve core rod to a fourth set position, the fourth fluid channel is in the open state while the third fluid channel is in the closed state, and the contact triggers the fourth contact switch to connect the fourth electrifying switch circuit.

Preferably, the first control valve and the second control valve are selected from one of the following combinations:
1) both the first control valve and the second control valve are electrically controlled three-way solenoid valves;
2) the first control valve is a manual two-position three-way valve, and the second valve is the electrically controlled three-way solenoid valve;
3) the first control valve is the electrically controlled three-way solenoid valve, and the second control valve is the manual two-position three-way valve;
4) both the first control valve and the second control valve are manual two-position three-way valves;
5) both the first control valve and the second control valve are pneumatically controlled two-position three-way valves;
6) the first control valve is the manual two-position three-way valve, and the second control valve is the pneumatically controlled two-position three-way valve;
7) the first control valve is the pneumatically controlled two-position three-way valve, and the second control valve is the manual two-position three-way valve;
8) the first control valve is the electrically controlled three-way solenoid valve, and the second control valve is the pneumatically controlled two-position three-way valve;
9) the first control valve is the pneumatically controlled two-position three-way valve, and the second control valve is an electrically controlled two-position three-way solenoid valve;
10) the first control valve is a manual type first two-way control valve formed by the water inlet valve and the purge valve, and the second control valve is the electrically controlled three-way solenoid valve;
11) the first control valve is the electrically controlled three-way solenoid valve, and the second control valve is a manual type second two-way control valve formed by the water outlet valve and the reflux valve communicating with the purge water tank;
12) the first control valve is the manual type first two-way control valve formed by the water inlet valve and the purge valve, and the second control valve is the manual two-position three-way valve;
13) the first control valve is the manual two-position three-way valve, and the second control valve is the manual type second two-way control valve formed by the water outlet valve and the reflux valve communicating with the purge water tank;
14) the first control valve is the manual type first two-way control valve formed by the water inlet valve and the purge valve, and the second control valve is the pneumatically controlled two-position three-way valve;
15) the first control valve is the pneumatically controlled two-position three-way valve, and the second control valve is the manual type second two-way control valve formed by the water outlet valve and the reflux valve communicating with the purge water tank.

Preferably, the control circuit comprises: the first control valve, the second control valve, the high pressure pump, and an off-delay controller or a programmable logic controller (PLC) connected in parallel.

Preferably, the control circuit is a switch circuit formed by the first electrifying switch circuit, the second electrifying switch circuit, the third electrifying switch circuit, and the fourth electrifying switch circuit connected in parallel.

Preferably, the time controller is a time relay or a microcontroller unit (MCU).

A second technical solution of the invention is to provide a seawater desalination device. The seawater desalination device comprises: a seawater introducing and filtering device and a seawater reverse osmosis filtering device. The seawater introducing and filtering device comprises a seawater inlet valve, a seawater pump, and a precise filter assembly connected in that order via pipelines. The seawater reverse osmosis filtering device is formed by a first controller, a high pressure pump, a reverse osmosis membrane assembly, a pressure regulating valve, a second control valve, and a purge water tank connected in that order via pipelines. The first control valve arranged between the seawater introducing and filtering device and the seawater reverse osmosis filtering device is a first three-way solenoid valve. A first inlet of the first three-way solenoid valve communicates with an end of the seawater introducing and filtering device. A second inlet of the first three-way solenoid valve communicates with an output pipe of the purge water tank of the seawater reverse osmosis filtering device. An outlet of the first three-way solenoid valve communicates with an inlet of a high pressure pump of the seawater reverse osmosis filtering device. The seawater desalination device further comprises a control circuit.

Preferably, the second control valve arranged on a pipe behind the pressure regulating valve of the seawater reverse osmosis filtering device is a second three-way solenoid valve. An inlet of the second three-way solenoid valve communicates with the pressure regulating valve of the seawater reverse osmosis filtering device. A first outlet of the second three-way solenoid valve communicates with the concentrated water outlet of the seawater reverse osmosis filtering device. A second outlet of the second three-way solenoid valve communicates with an inlet of the purge water tank of the seawater reverse osmosis filtering device.

It is a third technical solution of the invention to provide a seawater desalination device. The seawater desalination device comprises: a seawater introducing and filtering device and a seawater reverse osmosis filtering device. The seawater introducing and filtering device comprising a seawater inlet valve, a seawater pump, and a precise filter assembly connected in that order via pipelines. The seawater reverse osmosis filtering device comprising a first controller, a high pressure pump, a reverse osmosis membrane assembly, a pressure regulating valve, a second control valve, and a purge water tank connected in that order via pipelines. The second control valve arranged on a pipe behind the pressure regulating valve of the seawater reverse osmosis filtering device is a second three-way solenoid valve. An inlet of the second three-way solenoid valve communicates with the pressure regulating valve of the seawater reverse osmosis filtering device. A first outlet of the second three-way solenoid valve communicates with the concentrated water outlet of the seawater reverse osmosis filtering device. A second outlet of the second three-way solenoid valve communicates with an inlet of the purge water tank of the seawater reverse osmosis filtering device. The seawater desalination device further comprises a control circuit.

Preferably, the first control valve arranged between the seawater introducing and filtering device and the seawater reverse osmosis filtering device is a first three-way solenoid valve. A first inlet of the first three-way solenoid valve communicates with an end of the seawater introducing and filtering device. A second inlet of the first three-way solenoid valve communicates with an output pipe of the purge water tank of the seawater reverse osmosis filtering device. An outlet of the first three-way solenoid valve communicates with an inlet of a high pressure pump of the seawater reverse osmosis filtering device.

It is a fourth technical solution to provide a method for desalinating seawater using the seawater desalination device. The method comprises the following steps:
1) when desalinating the seawater, rotating a valve core rod of a first two-way integrated control valve to a first set position to make a first fluid channel in an open state and a second fluid channel synchronously in a closed state, whereby allowing a contact to trigger a first contact switch to connect a first electrifying switch circuit;
2) continuously pumping the seawater by a high pressure pump to a reverse osmosis membrane assembly for preparing freshwater, discharging the prepared freshwater from a freshwater outlet of the reverse osmosis membrane assembly in two paths, and allowing one path of the freshwater to pass through a freshwater outlet valve and then discharging the path of the freshwater for use, and allowing the other path of the freshwater to pass through a liquid level valve and reach a purge water tank; and allowing a concentrated seawater produced from filtration to pass through a pressure regulating valve and discharging the concentrated seawater via a water outlet valve;
3) when the seawater desalination is finished and the seawater desalination device is to be stopped, rotating the valve core rod of the first two-way integrated control valve to a second set position to make the second fluid channel in the open state and the first fluid channel in the closed state, whereby allowing the contact to trigger a second contact switch to connect a second electrifying switch circuit; and
4) controlling a high pressure pump to operate for a set time by a time controller of the second electrifying switch circuit, during an operation process of the high pressure pump, introducing the freshwater of the purge water tank via the purge valve to the high pressure pump, pumping the freshwater to the reverse osmosis membrane assembly from the high pressure pump for replacing the seawater in the reverse osmosis membrane assembly, and discharging replaced seawater via the pressure regulating valve and the water outlet valve.

It is a fifth technical solution of the invention to provide a method for cleaning the seawater desalination device. The method comprises the following steps:
1) when the reverse osmosis membrane assembly is to be washed, adding a detergent to a purge water tank, disconnecting a first three-way solenoid valve, rotating a valve core rod of a first two-way integrated control valve to a second set position to make a second fluid channel in an open state and a first fluid channel in a closed state; in the meanwhile, rotating a valve core rod of a second two-way integrated control valve to a fourth set position to make the fourth fluid channel in the open state and the third fluid channel in the closed state and to trigger a fourth contact switch to connect a fourth electrifying switch circuit by a contact;
2) controlling the high pressure pump to operate for a set time by a time controller of the fourth electrifying switch circuit, during which, introducing the detergent of the purge water tank to the high pressure pump via a purge valve, pumping the detergent by the high pressure pump to the reverse osmosis membrane assembly for washing the reverse osmosis membrane assembly, and refluxing the detergent from the reverse osmosis membrane assembly to the purge tank, thus realizing repeated cycles of washing of the reverse osmosis membrane assembly;
3) when the set time of the time controller in the fourth electrifying switch circuit is reached, rotating the valve core rod of the second two-way integrated control valve to a third set position to make the third fluid channel in the open state and the fourth fluid channel in the closed state and to trigger a third contact switch to connect a third electrifying switch circuit by a contact; and
4) controlling the high pressure pump to operate for a set time by the time controller of the third electrifying switch circuit, during which, introducing the detergent of the purge water tank to the high pressure pump via a purge valve, pumping the detergent by the high pressure pump to the reverse osmosis membrane assembly, and discharging the detergent via the pressure regulating valve and a water outlet valve.

It is a sixth technical solution to provide a method for desalinating seawater using the seawater desalination device. The method comprises the following steps:
1) when desalinating the seawater, starting a first three-way solenoid valve to make a first inlet channel in an open state and a second inlet channel synchronously in a closed state, whereby allowing the seawater to pass through the first inlet channel to a high pressure pump; in the meanwhile, making the second three-way solenoid valve in a halt state, and making a first outlet channel of the second three-way solenoid valve in an open state and a second outlet channel thereof in a closed state;
2) starting the high pressure pump, continuously pumping the seawater by the high pressure pump to a reverse osmosis membrane assembly to prepare freshwater; discharging the prepared freshwater from a freshwater outlet of the reverse osmosis membrane assembly in two paths, and allowing one path of the freshwater to pass through a freshwater outlet valve and then discharging the path of the freshwater for use, and allowing the other path of the freshwater to pass through a liquid level valve and reach a purge water tank; and allowing a concentrated seawater produced from filtration to pass through a pressure regulating valve and discharging the concentrated seawater via the first outlet channel of the second three-way solenoid valve and a concentrated water outlet;
3) when the seawater desalination is finished and the seawater desalination device is to be stopped, disconnecting the first three-way solenoid valve and at the same time allowing a time controller to operate, and allowing the second inlet channel to be in the open state and the first inlet channel to be in the closed state, and introducing the freshwater in the purge water tank via the second inlet channel to the high pressure pump; and operating the high pressure pump for a set time under the control of the time controller; and
4) pumping the freshwater from the purge water tank to the reverse osmosis membrane assembly by the high pressure pump, replacing the seawater in the reverse osmosis membrane assembly, and discharging replaced seawater via the pressure regulating valve, the first outlet channel of the second three-way solenoid valve, and the concentrated water outlet.

It is a seventh technical solution of the invention to provide a method for cleaning the seawater desalination device. The method comprises the following steps:
1) when the reverse osmosis membrane assembly is to be washed, adding a detergent to a purge water tank, disconnecting a first three-way solenoid valve, opening a second inlet channel and allowing the detergent of the purge water tank to flows to a high pressure pump, and closing a first inlet channel for preventing the seawater from inside; in the meanwhile, connecting a second three-way solenoid valve and starting the high pressure pump and a time controller, opening a second outlet channel of the second three-way solenoid valve and closing a first outlet channel for preventing the detergent from discharging;
2) pumping the detergent of the purge water tank to the reverse osmosis membrane assembly by the high pressure pump, allowing the detergent to pass through a pressure regulating valve and the second outlet channel of the second three-way solenoid valve to enter the purge water tank and the second inlet channel of the first three-way solenoid valve respectively to return to the high pressure pump, thus realizing repeated cycles of washing of the reverse osmosis membrane assembly; and
3) disconnecting the second three-way solenoid valve at a set time by the time controller, closing the second outlet of the second three-way solenoid valve, stopping the cycles of washing, and discharging the detergent from a concentrated water outlet via the first outlet channel of the second three-way solenoid valve; and stopping operation of the high pressure pump at a set time by the time controller.

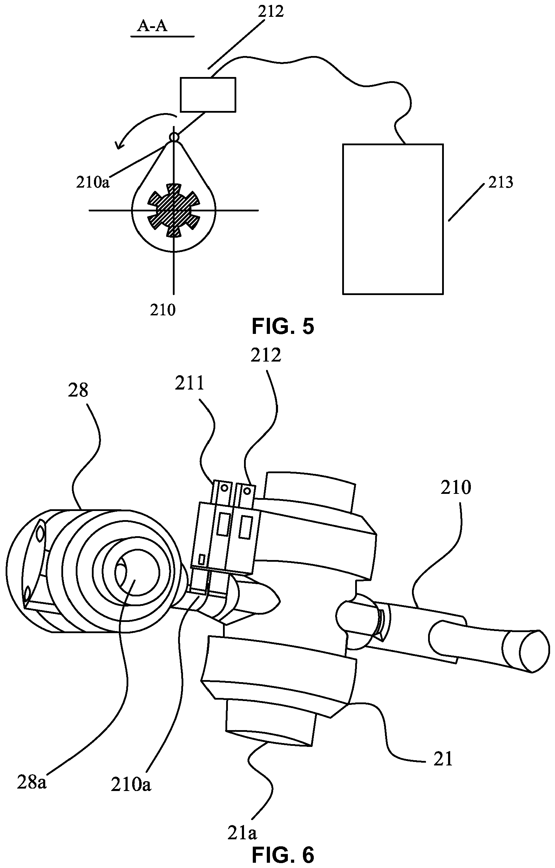

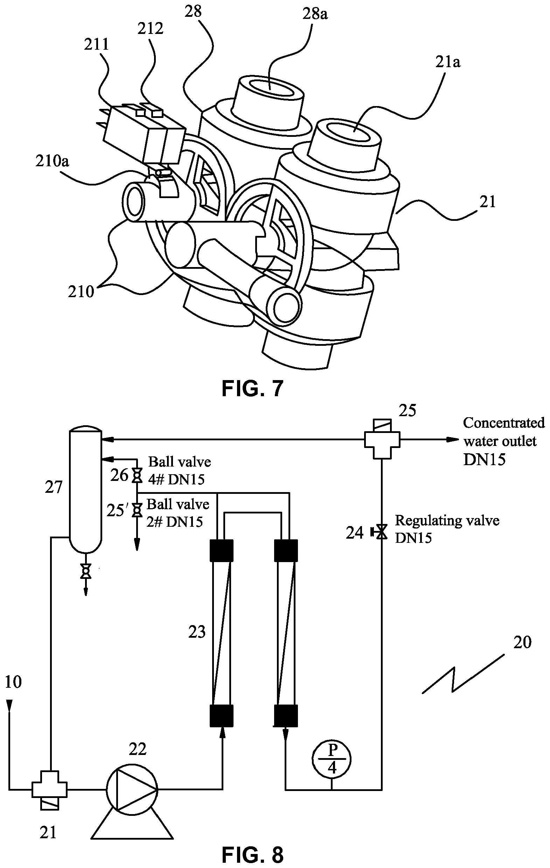

Advantages of the invention are summarized as follows:
1) By adopting the above structures, the first two-way integrated control valve of the seawater desalination device is able to synchronously control the on/off state of both the water inlet valve and the purge valve. Only by the action of rotating the valve core rod, the water inlet valve and the purge valve are switched between the normal seawater desalination and the freshwater replacement in a halt state, and the contact switch and the time controller are employed to control the operation state of the high pressure pump. In addition, the second two-way integrated control valve is used at the same time to control the on/off state of the water outlet valve and the reflux valve. Only by the action of rotating the valve core rod, the water outlet valve and the reflux valve are switched between the detergent washing operation and the detergent discharging operation, and the contact switch and the time controller are employed to control the operation state of the high pressure pump.
2) the seawater desalination structure is improved and optimized to realize the seawater desalination operation, the washing operation in the halt state, and the detergent washing by only one action, i.e., regulating the two-way integrated control valve, so that the process is greatly simplified, the operation steps are saved, and the working efficiency is improved.
3) The seawater desalination structure is improved and optimized to realize the seawater desalination operation, the washing operation in the halt state, and the detergent washing by only one action, i.e., regulating the two-way integrated control valve, so that the process is greatly simplified, the operation steps are saved, and the working efficiency is improved. The high pressure pump of the invention generally adopts a plunger type high pressure pump.
4) two two-way integrated control valves are employed and both the valves are based on the same principle. Specific structures can be the same or respectively adopts the series connected structure in FIG. 6 or the parallel connected structure in FIG. 7. The two valves are respectively arranged at water inlet position and water outlet position, thus saving the operation steps of the washing operation in the halt state, and the detergent washing, simplifying the structure, and improving the efficiency.
5) working process of the seawater desalination, the washing in the halt state, and the detergent washing can be realized by only one action, i.e., regulating the first three-way solenoid valve and the second three-way solenoid valve, so that the process is greatly simplified, the operation steps are saved, and the working efficiency is improved.
6) The original two control valves are substituted by one solenoid valve, thus simplifying the structure, reducing the production cost of the system, decreasing the fault rate of the system, being convenient in maintenance and automatically controllable.
7) The structure of the system is optimized, multiple contact switches of the original product are saved, so that the efficiency of the freshwater preparation is significantly improved.
8) multiple combinations of control valves including the electrically controlled, manually controlled, and pneumatically controlled valves are provided to meet different demands of users.
   FIG. 1 is a structure diagram showing connection of a seawater reverse osmosis filtering device;
   FIG. 2 is a structure diagram of a seawater introducing and filtering device;
   FIG. 3 is a schematic diagram of a two-way integrated control valve in a first embodiment of the invention;
   FIG. 4 is a cross sectional view of part A-A of FIG. 3 in a first state;
   FIG. 5 is a cross sectional view of part A-A of FIG. 3 in a second state;
   FIG. 6 is a stereogram of a two-way integrated control valve in series connection;
   FIG. 7 is a stereogram of a two-way integrated control valve in parallel connection;
   FIG. 8 is a systematic structure diagram of a seawater desalination device, in which both a first control valve and a second control valve are electrically controlled three-way solenoid valve;
   FIG. 9 is a systematic structure diagram of a seawater desalination device, in which a first control valve is an electrically controlled three-way solenoid valve, and a second control valve is a second two-way control valve; and
   FIG. 10 is a systematic structure diagram of a seawater desalination device, in which a first control valve is a first two-way control valve, and a second control valve is an electrically controlled three-way solenoid valve.

For further illustrating the invention, experiments detailing a seawater desalination device, a desalination method using the same and a cleaning method thereof using a detergent are described below. It should be noted that the following examples are intended to describe and not to limit the invention.

### Example 1

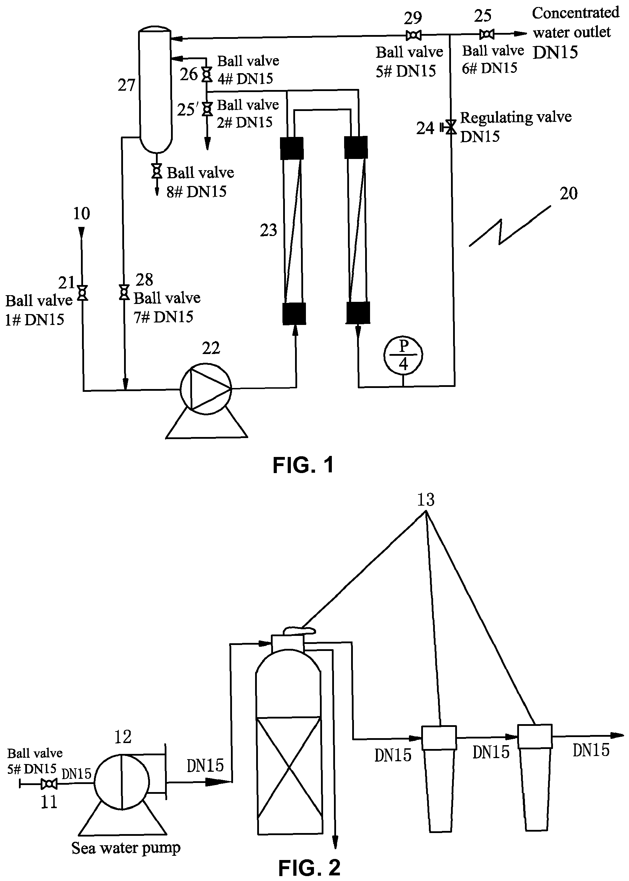

As shown in FIGS. 1-7, a seawater desalination device comprises a seawater introducing and filtering device 10 and a seawater reverse osmosis filtering device 20. The seawater reverse osmosis filtering device 20 comprises a water inlet valve 21, a high pressure pump 22, a reverse osmosis membrane assembly 23, a pressure regulating valve 24, water outlet valve 25, a fresh water outlet valve 25', a liquid level valve 26, a purge water tank 27, and a purge valve 28.

The seawater is filtrated in the seawater introducing and filtering device 10; following the filtration, the seawater passes through the water inlet valve 21 and is communicated with the high pressure pump 22. Then the seawater is communicated with a water inlet of the reverse osmosis membrane assembly 23 to produce fresh water. The fresh water is distributed to two paths from a fresh water outlet of the reverse osmosis membrane assembly 23. One path is communicated with the fresh water outlet valve 25' and is discharged from the fresh water outlet valve; and the other path is communicated with the liquid level valve 26 and is allowed to enter the purge water tank 27. The concentrated seawater produced during the filtration passes through the pressure regulating valve 24 and is discharged from the water outlet valve 25. The purge water tank 27 is connected to a water inlet of the high pressure pump 22 via the purge valve 28.

The water inlet valve 21 and the purge valve 28 are integrated to from a first integrated control valve which is ganged. The water inlet valve 21 comprises a first fluid channel 21 a, and the purge valve 28 comprises a second fluid channel 28a. The first fluid channel 21 a and the second fluid channel 28a are coordinated with and simultaneously rotated with a valve core rod 210. The valve core rod 210 comprises a contact 210a, and the contact 210a is corresponding to a first contact switch 211 and a second contact switch 212 which are disposed at different positions, respectively. The first contact switch 211 is electrically connected to a switch of the high pressure pump 22 to form a first electrifying switch circuit, and the second contact switch 212 is electrically connected to a time controller 213 and a switch of the high pressure pump 22 to form a second electrifying switch circuit.

When the valve core rod 210 is rotated to a first set position, the first fluid channel 21 a is in an on state, and the second fluid channel 28a is in an off state. The contact triggers the first contact switch 211, and the first electrifying switch circuit is turned on.

When the valve core rod 210 is rotated to a second set position, the second fluid channel 28a is in an on state, and the first fluid channel 21 a is in an off state. The contact triggers the second contact switch 212, and the second electrifying switch circuit is turned on.

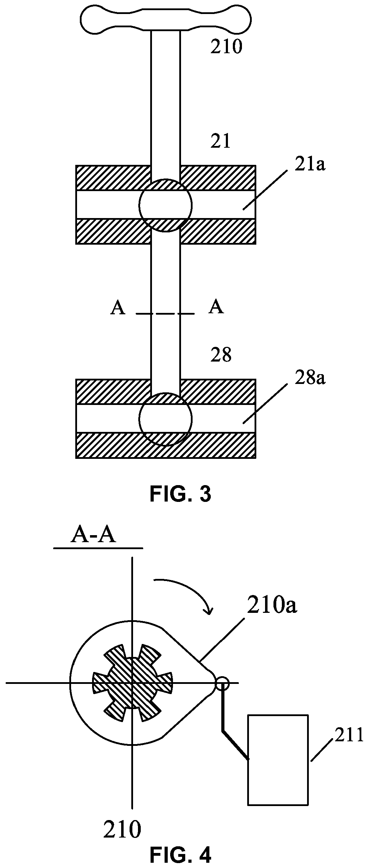

In addition to the pressure regulating valve 24, a reflux valve 29 is also provided in the invention. The reflux valve 29 is communicated with the purge water tank 27. The reflux valve 29 and the water outlet valve 25 are integrated to form a second integrated control valve which is ganged. The second integrated control valve follows a basic structure and principle of the first integrated control valve. As shown in FIGS. 3-7, the water outlet valve 25 comprises a third fluid channel, and the reflux valve 29 comprises a fourth fluid channel. The third fluid channel and the fourth fluid channel are coordinated with and simultaneously rotated with a valve core rod. The valve core rod comprises a contact, and the contact is corresponding to a third contact switch and a fourth contact switch which are disposed at different positions, respectively. The third contact switch is electrically connected to a time controller and a switch of the high pressure pump to form a third electrifying switch circuit, and the fourth contact switch is electrically connected to a time controller and a switch of the high pressure pump to form a fourth electrifying switch circuit.

When the valve core rod is rotated to a third set position, the third fluid channel is in an on state, and the fourth fluid channel is in an off state. The contact triggers the third contact switch, and the third electrifying switch circuit is turned on.

When the valve core rod is rotated to a fourth set position, the fourth fluid channel is in an on state, and the third fluid channel is in an off state. The contact triggers the fourth contact switch, and the fourth electrifying switch circuit is turned on.

The seawater introducing and filtering device comprises a seawater inlet valve 11, a seawater pump 12, and a precision filter assembly 13. An end of the seawater inlet valve 11 is connected to a seawater inlet, and another end of the seawater inlet valve 11 is connected to the seawater pump 12. An outlet end of the seawater pump 12 is connected to the precision filter assembly 13. An outlet of the precision filter assembly 13 is connected to the water inlet valve 21.

The time controller 213 is a time relay or a MCU.

The first electrifying switch circuit, the second electrifying switch circuit, the third electrifying switch circuit, and the fourth electrifying switch circuit are parallel switch circuits.

A seawater desalination method of the seawater desalination device in operation and during downtime in the invention, the method comprising:
1) when the seawater needs to be desalinated, the valve core rod 210 of the first integrated control valve is rotated to a first set position, thus the first fluid channel 21 a is in an on state, and simultaneously the second fluid channel 28a is in an off state; the contact triggers the first contact switch 211, and the first electrifying switch circuit is turned on;
2) the high pressure pump 22 is allowed to constantly pump the seawater to the reverse osmosis membrane assembly 23 to produce fresh water; the fresh water is distributed to two paths from a fresh water outlet of the reverse osmosis membrane assembly 23; one path is communicated with the fresh water outlet valve 25' and is discharged from the fresh water outlet valve; and the other path is communicated with the liquid level valve 26 and is allowed to enter the purge water tank 27; the concentrated seawater produced during the filtration passes through the pressure regulating valve 24 and is discharged from the water outlet valve 25;
3) when the seawater desalination device is turned off as the desalination is finished, the valve core rod 210 of the first integrated control valve is rotated to a second set position, thus the second fluid channel 28a is in an on state, and the first fluid channel 21 a is in an off state; the contact triggers the second contact switch 212, and the second electrifying switch circuit is turned on;
4) the high pressure pump 22 is controlled by the time controller 213 of the second electrifying switch circuit, and the time controller sets time to turn off the high pressure pump; during an operation of the high pressure pump 22, the fresh water in the purge water tank 27 is allowed to enter the high pressure pump 22 via the purge valve 28, and then the fresh water is pumped to the reverse osmosis membrane assembly 23 from the high pressure pump 22 to replace the seawater in the reverse osmosis membrane assembly 23; and the replaced seawater passes through the pressure regulating valve 24 and is discharged from the water outlet valve 25;

A method for washing the reverse osmosis membrane assembly of the seawater desalination device after long-term service using detergent, the method comprising:
1) when the reverse osmosis membrane assembly needs to be washed by detergent, the detergent is added to the purge water tank 27; the valve core rod 210 of the first integrated control valve is rotated to a second set position, thus the second fluid channel 28a is in an on state, and the first fluid channel 21 a is in an off state; meanwhile, the valve core rod of the second integrated control valve is rotated to a fourth set position, the fourth fluid channel is in an on state, and the third fluid channel is in an off state; the contact triggers the fourth contact switch, and the fourth electrifying switch circuit is turned on;
2) the high pressure pump is controlled by the time controller of the fourth electrifying switch circuit, and the time controller sets time to turn off the high pressure pump; during an operation of the high pressure pump, the detergent in the purge water tank 27 is allowed to enter the high pressure pump 22 via the purge valve 28, and then the detergent is pumped to the reverse osmosis membrane assembly 23 from the high pressure pump 22 to wash the reverse osmosis membrane assembly 23; then the detergent passes through the fourth fluid channel of the reflux valve 29 and is allowed to return back to the purge water tank 27; the above process is repeated to wash the reverse osmosis membrane assembly;
3) when the set time of the time controller of the fourth electrifying switch circuit is over, the valve core rod of the second integrated control valve is rotated to a third set position, thus the third fluid channel is in an on state, and the fourth fluid channel is in an off state; the contact triggers the third contact switch, and the third electrifying switch circuit is turned on;
4) the high pressure pump 22 is then controlled by the time controller of the third electrifying switch circuit, and the time controller sets time to turn off the high pressure pump; during an operation of the high pressure pump 22, the detergent in the purge water tank 27 is allowed to enter the high pressure pump 22 via the purge valve 28, and then the detergent is pumped to the reverse osmosis membrane assembly 23 from the high pressure pump 22; the detergent passes through the reverse osmosis membrane assembly 23 and the pressure regulating valve 24, and is discharged from the water outlet valve.

### Example 2

As shown in FIGS. 2 and 8, a seawater desalination device comprises a seawater introducing and filtering device 10 and a seawater reverse osmosis filtering device 20.

As shown in FIG. 2, the seawater introducing and filtering device comprises a seawater inlet valve 11, a seawater pump 12, and a filter assembly 13. An end of the seawater inlet valve 11 is connected to a seawater inlet, and another end of the seawater inlet valve 11 is connected to the seawater pump 12. An outlet end of the seawater pump 12 is connected to the filter assembly 13. An outlet of the filter assembly 13 is connected to a first three-way solenoid valve 21.

As shown in FIG. 8, the first three-way solenoid valve 21 is disposed between the seawater introducing and filtering device 10 and the seawater reverse osmosis filtering device 20. A first inlet of the first three-way solenoid valve 21 is connected to an end of the seawater introducing and filtering device 10. The second inlet of the first three-way solenoid valve 21 is communicated with an output line of the purge water tank 27 in the seawater reverse osmosis filtering device 20. A first outlet of the first three-way solenoid valve 21 is connected to an input port of the high pressure pump 22 in the seawater reverse osmosis filtering device 20. The seawater is filtrated in the seawater introducing and filtering device 10; following the filtration, the seawater passes through the first three-way solenoid valve 21 and is communicated with the high pressure pump 22. Then the seawater is communicated with a water inlet of the reverse osmosis membrane assembly 23 to produce fresh water. The fresh water is distributed to two paths from a fresh water outlet of the reverse osmosis membrane assembly 23. One path is communicated with the fresh water outlet valve 25' and is discharged from the fresh water outlet valve; and the other path is communicated with the liquid level valve 26 and is allowed to enter the purge water tank 27. The concentrated seawater produced during the filtration passes through the pressure regulating valve 24 and is discharged from a second three-way solenoid valve 25. A first inlet of the second three-way solenoid valve 25 is communicated with the pressure regulating valve 24. A first outlet of the second three-way solenoid valve 25 is communicated with a concentrated seawater outlet in the seawater reverse osmosis filtering device 20. A second outlet of the second three-way solenoid valve 25 is connected to the input port of the purge water tank 27 in the seawater reverse osmosis filtering device 20. The seawater desalination device further comprises a control circuit. The control circuit comprises the first three-way solenoid valve 21, the second three-way solenoid valve 25, the high pressure pump 22, and an off-delay controller (not shown) or a programmable logic controller (not shown). The first three-way solenoid valve 21, the second three-way solenoid valve 25, the high pressure pump 22, and an off-delay controller (not shown) or a programmable logic controller (not shown) are parallel.

As shown in FIG. 8, a seawater desalination method of the seawater desalination device in operation and during downtime in the invention, the method comprising:
1) when the seawater needs to be desalinated, the first three-way solenoid valve 21 is turned on, thus a first inlet channel is in an on state, and simultaneously the second inlet channel is in an off state; the seawater is allowed to flow in the high pressure pump 22 via the first inlet channel; at the same time, the second three-way solenoid valve 25 is turned off, thus a first outlet channel of the second three-way solenoid valve 25 is in an on state, and a second outlet channel is in an off state;
2) the high pressure pump 22 is allowed to constantly pump the seawater to the reverse osmosis membrane assembly 23 to produce fresh water; the fresh water is distributed to two paths from a fresh water outlet of the reverse osmosis membrane assembly 23; one path is communicated with the fresh water outlet valve 25' and is discharged from the fresh water outlet valve; and the other path is communicated with the liquid level valve 26 and is allowed to enter the purge water tank 27; the concentrated seawater produced during the filtration passes through the pressure regulating valve 24 and the first outlet channel of the second three-way solenoid valve 25, and is discharged from the concentrated seawater outlet;
3) when the seawater desalination device is turned off as the desalination is finished, the first three-way solenoid valve 21 is turned off, meanwhile the time controller (not shown) is actuated, thus the second inlet channel is in an on state, and the first inlet channel is in an off state; the fresh water in the purge water tank 27 is allowed to flow to the high pressure pump 22 via the second inlet channel; the high pressure pump 22 is controlled by the time controller (not shown), and the time controller sets time to turn off the high pressure pump;
4) the fresh water in the purge water tank 27 is pumped to the reverse osmosis membrane assembly 23 via the high pressure pump 22 to replace the seawater in the reverse osmosis membrane assembly 23; and the replaced seawater passes through the pressure regulating valve 24 and the first outlet channel of the second three-way solenoid valve 25, and is discharged from the concentrated seawater outlet.

As shown in FIGS. 2 and 5, a method for washing the reverse osmosis membrane assembly 23 of the seawater desalination device after long-term service using detergent, the method comprising:
1) when the reverse osmosis membrane assembly 23 needs to be washed by detergent, the detergent is added to the purge water tank 27; the first three-way solenoid valve 21 is turned off, thus the second inlet channel is in an on state, the detergent in the purge water tank 27 is allowed to flow in the high pressure pump 22; the first inlet channel is in an off state, thus preventing the seawater from entering in; meanwhile, the second three-way solenoid valve 25 is turned on, and the high pressure pump 22 and the time controller (not shown) are actuated, thus the second outlet channel of the second three-way solenoid valve 25 is in an on state, and the first outlet channel is in an off state, preventing the detergent from being discharged;
2) the detergent in the purge water tank 27 is pumped to the reverse osmosis membrane assembly 23 via the high pressure pump 22; then the detergent passes through the pressure regulating valve 24 and the second outlet channel of the second three-way solenoid valve 25, and is allowed to return back to the purge water tank 27; the detergent then is allowed to enter the high pressure pump 22 via the second inlet channel of the first three-way solenoid valve 21 to repeat the washing of the reverse osmosis membrane assembly 23;
3) the time controller (not shown) operates to control the second three-way solenoid valve 25, and the time controller sets time to turn off the second three-way solenoid valve; the second outlet channel of the second three-way solenoid valve 25 is in an off state, thus the cyclic washing is stopped; the detergent passes through the first outlet channel of the second three-way solenoid valve 25 and is discharged from the concentrated seawater outlet; again the time controller (not shown) operates to control the high pressure pump, and sets time to turn off the high pressure pump.

In the example, the first three-way solenoid valve 21 and the second three-way solenoid valve 25 are electrically controlled; except the example, the following alternative combinations is optional according to needs for those skilled in the art:
1) the first control valve is a manual two-position three-way valve, and the second control valve is an electrically controlled three-way solenoid valve;
2) the first control valve is an electrically controlled three-way solenoid valve, and the second control valve is a manual two-position three-way valve;
3) the first control valve and the second control valve are manual two-position three-way valve;
4) the first control valve is a manual two-position three-way valve, and the second control valve is an electrically controlled two-position three-way gas control valve;
5) the first control valve is an electrically controlled two-position three-way gas control valve, and the second control valve is a manual two-position three-way valve;
6) the first control valve is an electrically controlled two-position three-way gas control valve, and the second control valve is an electrically controlled two-position three-way solenoid valve;
7) the first control valve is a manual integrated control valve which is ganged and integrates a water inlet valve and a purge valve, and the second control valve is a manual two-position three-way valve;
8) the first control valve is a manual two-position three-way valve, and the second control valve is a manual integrated control valve which is ganged and integrates a water inlet valve and a purge valve;
9) the first control valve is a manual integrated control valve which is ganged and integrates a water inlet valve and a purge valve, and the second control valve is an electrically controlled two-position three-way gas control valve; and
10) the first control valve is an electrically controlled two-position three-way gas control valve, and the second control valve is a manual integrated control valve which is ganged and integrates a water inlet valve and a purge valve.

### Example 3

As shown in FIGS. 2, 3, 4, 5, and 9, a seawater desalination device comprises a seawater introducing and filtering device 10 and a seawater reverse osmosis filtering device 20.

As shown in FIG. 2, the seawater introducing and filtering device comprises a seawater inlet valve 11, a seawater pump 12, and a filter assembly 13. An end of the seawater inlet valve 11 is connected to a seawater inlet, and another end of the seawater inlet valve 11 is connected to the seawater pump 12. An outlet end of the seawater pump 12 is connected to the filter assembly 13. An outlet of the filter assembly 13 is connected to a first three-way solenoid valve 21.

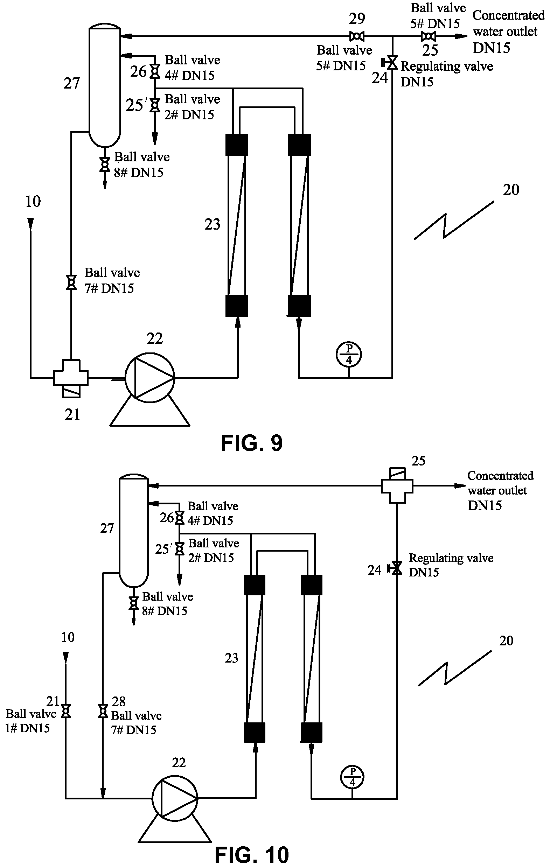

As shown in FIG. 9, the first three-way solenoid valve 21 is disposed between the seawater introducing and filtering device 10 and the seawater reverse osmosis filtering device 20. The seawater is filtrated in the seawater introducing and filtering device 10; following the filtration, the seawater passes through the first three-way solenoid valve 21 and is communicated with the high pressure pump 22. A first inlet of the first three-way solenoid valve 21 is connected to an end of the seawater introducing and filtering device 10. The second inlet of the first three-way solenoid valve 21 is communicated with an output line of the purge water tank 27 in the seawater reverse osmosis filtering device 20. A first outlet of the first three-way solenoid valve 21 is connected to an input port of the high pressure pump 22 in the seawater reverse osmosis filtering device 20. Then the seawater is communicated with a water inlet of the reverse osmosis membrane assembly 23 to produce fresh water. The fresh water is distributed to two paths from a fresh water outlet of the reverse osmosis membrane assembly 23. One path is communicated with the fresh water outlet valve 25' and is discharged from the fresh water outlet valve; and the other path is communicated with the liquid level valve 26 and is allowed to enter the purge water tank 27.

As shown in FIG. 1, 3, and 4, the concentrated seawater produced during the filtration passes through the pressure regulating valve 24 and is discharged from the water outlet valve 25. In addition to the pressure regulating valve 24, a reflux valve 29 is also provided in the invention. The reflux valve 29 is communicated with the purge water tank 27. The reflux valve 29 and the water outlet valve 25 are integrated to form a second integrated control valve which is ganged. The water outlet valve 25 comprises a third fluid channel, and the reflux valve 29 comprises a fourth fluid channel. The third fluid channel and the fourth fluid channel are coordinated with and simultaneously rotated with a valve core rod 210. The valve core rod 210 comprises a contact 210a, and the contact 210a is corresponding to a third contact switch (not shown) and a fourth contact switch (not shown) which are disposed at different positions, respectively. The third contact switch (not shown) is electrically connected to a programmable logic controller 213 and a switch of the high pressure pump to form a third electrifying switch circuit, and the fourth contact switch (not shown) is electrically connected to a programmable logic controller 213 and a switch of the high pressure pump 22 to form a fourth electrifying switch circuit. When the valve core rod 210 is rotated to a third set position, the third fluid channel is in an on state, and the fourth fluid channel is in an off state. The contact 210a triggers the third contact switch, and the third electrifying switch circuit is turned on.

When the valve core rod 210 is rotated to a fourth set position, the fourth fluid channel is in an on state, and the third fluid channel is in an off state. The contact 210a triggers the fourth contact switch, and the fourth electrifying switch circuit is turned on. The programmable logic controller 213, the third electrifying switch circuit, and the fourth electrifying switch circuit are parallel switch circuits.

In the example, the combination of the first control valve and the second control valve is: the first control is an electrically controlled three-way solenoid valve 21, and the second control valve is the second integrated control valve which is ganged and integrates the water outlet valve 25 which discharges water and the reflux valve 29 which is communicated with the purge water tank 27.

As shown in FIGS. 2, 3, 4, 5, and 9, a seawater desalination method of the seawater desalination device in operation and during downtime in the invention, the method comprising:
1) when the seawater needs to be desalinated, the first three-way solenoid valve 21 is turned on, thus a first inlet channel is in an on state, and simultaneously the second inlet channel is in an off state; the seawater is allowed to flow in the high pressure pump 22 via the first inlet channel;
2) the high pressure pump 22 is allowed to constantly pump the seawater to the reverse osmosis membrane assembly 23 to produce fresh water; the fresh water is distributed to two paths from a fresh water outlet of the reverse osmosis membrane assembly 23; one path is communicated with the fresh water outlet valve 25' and is discharged from the fresh water outlet valve; and the other path is communicated with the liquid level valve 26 and is allowed to enter the purge water tank 27; the concentrated seawater produced during the filtration passes through the pressure regulating valve 24 and the water outlet valve 25, and is discharged from the concentrated seawater outlet;
3) when the seawater desalination device is turned off as the desalination is finished, the first three-way solenoid valve 21 is turned off, meanwhile the programmable logic controller 213 is actuated, thus the second inlet channel is in an on state, and the first inlet channel is in an off state; the fresh water in the purge water tank 27 is allowed to flow to the high pressure pump 22 via the second inlet channel; the high pressure pump 22 is controlled by the programmable logic controller 213, and the programmable logic controller 213 sets time to turn off the high pressure pump;
4) the fresh water in the purge water tank 27 is pumped to the reverse osmosis membrane assembly 23 via the high pressure pump 22 to replace the seawater in the reverse osmosis membrane assembly 23; and the replaced seawater passes through the pressure regulating valve 24 and the water outlet valve 25, and is discharged from the concentrated seawater outlet.

As shown in FIGS. 2, 3, 4, 5, and 9, a method for washing the reverse osmosis membrane assembly 23 of the seawater desalination device after long-term service using detergent, the method comprising:
1) when the reverse osmosis membrane assembly 23 needs to be washed by detergent, the detergent is added to the purge water tank 27; the first three-way solenoid valve 21 is turned off, thus the second inlet channel is in an on state, the detergent in the purge water tank 27 is allowed to flow in the high pressure pump 22; the first inlet channel is in an off state, thus preventing the seawater from entering in; meanwhile, the valve core rod 210 is rotated to a fourth set position, the fourth fluid channel is in an on state, and the third fluid channel is in an off state; the contact 210a triggers the fourth contact switch, and the fourth electrifying switch circuit is turned on;
2) the high pressure pump 22 is controlled by the programmable logic controller 213 of the fourth electrifying switch circuit, and the programmable logic controller 213 sets time to turn off the high pressure pump; during an operation of the high pressure pump 22, the detergent in the purge water tank 27 is allowed to enter the high pressure pump 22 through the second inlet channel of the first three-way solenoid valve 21, and then the detergent is pumped to the reverse osmosis membrane assembly 23 from the high pressure pump 22 to wash the reverse osmosis membrane assembly 23; then the detergent passes through the reflux valve 29 and is allowed to return back to the purge water tank 27; the above process is repeated to wash the reverse osmosis membrane assembly 23;
3) when the set time of the programmable logic controller 213 of the fourth electrifying switch circuit is over, the valve core rod 210 is rotated to a third set position, thus the third fluid channel is in an on state, and the fourth fluid channel is in an off state; the contact 210a triggers the third contact switch, and the third electrifying switch circuit is turned on;
4) the high pressure pump 22 is then controlled by the programmable logic controller 213 of the third electrifying switch circuit, and the programmable logic controller sets time to turn off the high pressure pump; during an operation of the high pressure pump 22, the detergent in the purge water tank 27 is allowed to enter the high pressure pump 22 via the second inlet channel of the first three-way solenoid valve 21, and then the detergent is pumped to the reverse osmosis membrane assembly 23 from the high pressure pump 22; the detergent passes through the reverse osmosis membrane assembly 23 and the pressure regulating valve 24, and is discharged from the water outlet valve 25.

### Example 4

As shown in FIGS. 2, 3, 4, 5, and 10, a seawater desalination device comprises a seawater introducing and filtering device 10 and a seawater reverse osmosis filtering device 20.

As shown in FIG. 2, the seawater introducing and filtering device comprises a seawater inlet valve 11, a seawater pump 12, and a filter assembly 13. An end of the seawater inlet valve 11 is connected to a seawater inlet, and another end of the seawater inlet valve 11 is connected to the seawater pump 12. An outlet end of the seawater pump 12 is connected to the filter assembly 13. An outlet of the filter assembly 13 is connected to a water inlet valve 21.

As shown in FIGS. 3, 4, and 10, the water inlet valve 21 and the purge valve 28 are integrated to from a first integrated control valve which is ganged. The water inlet valve 21 comprises a first fluid channel, and the purge valve 28 comprises a second fluid channel. The first fluid channel and the second fluid channel are coordinated with and simultaneously rotated with a valve core rod 210. The valve core rod 210 comprises a contact 210a, and the contact 210a is corresponding to a first contact switch 211 and a second contact switch (not shown) which are disposed at different positions, respectively. The first contact switch is electrically connected to a switch of the high pressure pump 22 to form a first electrifying switch circuit, and the second contact switch is electrically connected to a time controller 210 and a switch of the high pressure pump 22 to form a second electrifying switch circuit.

When the valve core rod 210 is rotated to a first set position, the first fluid channel is in an on state, and the second fluid channel is in an off state. The contact 210a triggers the first contact switch 211, and the first electrifying switch circuit is turned on. When the valve core rod 210 is rotated to a second set position, the second fluid channel is in an on state, and the first fluid channel is in an off state. The contact 210a triggers the second contact switch 212, and the second electrifying switch circuit is turned on.

As shown in FIG. 10, a second three-way solenoid valve 25 is disposed on a rear line of the pressure regulating valve 24 in the seawater reverse osmosis filtering device. A first inlet of the second three-way solenoid valve 25 is communicated with the pressure regulating valve 24. A first outlet of the second three-way solenoid valve 25 is communicated with a concentrated seawater outlet in the seawater reverse osmosis filtering device 20. A second outlet of the second three-way solenoid valve 25 is connected to the input port of the purge water tank 27 in the seawater reverse osmosis filtering device. The seawater desalination device further comprises a control circuit.

In the example, the first control circuit comprises a first integrated control valve, a second three-way solenoid valve 25, a high pressure pump 22, and an off-delay controller or a programmable logic controller (not shown). The first integrated control valve, a second three-way solenoid valve 25, a high pressure pump 22, and an off-delay controller or a programmable logic controller (not shown) are parallel.

In the example, the second control circuit is a parallel switch circuit comprising a first electrifying switch circuit and a second electrifying switch circuit.

In the example, the first control valve is a manual integrated control valve which is ganged and integrates a water inlet valve 21 and a purge valve 28, and the second control valve is an electrically controlled two-position three-way solenoid valve 25.

As shown in FIGS. 2, 3, 4, 5, and 10, a seawater desalination method of the seawater desalination device in operation and during downtime in the invention, the method comprising:
1) when the seawater needs to be desalinated, the valve core rod 210 of the first integrated control valve is rotated to a first set position, thus the first fluid channel is in an on state, and simultaneously the second fluid channel is in an off state; the contact 210a triggers the first contact switch 211, and the first electrifying switch circuit is turned on;
2) the high pressure pump 22 is allowed to constantly pump the seawater to the reverse osmosis membrane assembly 23 to produce fresh water; the fresh water is distributed to two paths from a fresh water outlet of the reverse osmosis membrane assembly 23; one path is communicated with the fresh water outlet valve 25' and is discharged from the fresh water outlet valve; and the other path is communicated with the liquid level valve 26 and is allowed to enter the purge water tank 27; the concentrated seawater produced during the filtration passes through the first outlet channel of the second three-way solenoid valve 25 and is discharged from the concentrated seawater outlet;
3) when the seawater desalination device is turned off as the desalination is finished, the valve core rod 210 of the first integrated control valve is rotated to a second set position, thus the second fluid channel is in an on state, and the first fluid channel is in an off state; the contact 210a triggers the second contact switch 212, and the second electrifying switch circuit is turned on;
4) the high pressure pump 22 is controlled by the time controller 213 of the second electrifying switch circuit or the programmable logic controller, and the time controller or the programmable logic controller sets time to turn off the high pressure pump; during an operation of the high pressure pump 22, the fresh water in the purge water tank 27 is allowed to enter the high pressure pump 22 via the purge valve 28, and then the fresh water is pumped to the reverse osmosis membrane assembly 23 from the high pressure pump 22 to replace the seawater in the reverse osmosis membrane assembly 23; and the replaced seawater passes through the pressure regulating valve 24 and the first outlet channel of the second three-way solenoid valve 25, and is discharged from the concentrated seawater outlet;

As shown in FIGS. 2, 3, 4, 5, and 10, a method for washing the reverse osmosis membrane assembly 23 of the seawater desalination device after long-term service using detergent, the method comprising:
1) when the reverse osmosis membrane assembly 23 needs to be washed by detergent, the detergent is added to the purge water tank 27; the valve core rod 210 of the first integrated control valve is rotated to a second set position, thus the second fluid channel is in an on state, and the first fluid channel is in an off state; meanwhile, the second three-way solenoid valve 25 is turned on, and the high pressure pump 22 and the time controller or programmable logic controller 213 are actuated, thus the second outlet channel of the second three-way solenoid valve 25 is in an on state, and the first outlet channel is in an off state, preventing the detergent from being discharged;
2) the detergent in the purge water tank 27 is pumped to the reverse osmosis membrane assembly 23 via the high pressure pump 22; then the detergent passes through the pressure regulating valve 24 and the second outlet channel of the second three-way solenoid valve 25, and is allowed to return back to the purge water tank 27; the detergent then is allowed to enter the high pressure pump 22 via the purge valve 28 to repeat the washing of the reverse osmosis membrane assembly 23;
3) the time controller or the programmable logic controller 213 operates to control the second three-way solenoid valve 25, and the time controller or the programmable logic controller sets time to turn off the second three-way solenoid valve; the second outlet channel of the second three-way solenoid valve 25 is in an off state, thus the cyclic washing is stopped; the detergent passes through the first outlet channel of the second three-way solenoid valve 25 and is discharged from the concentrated seawater outlet; again the time controller or the programmable logic controller 213 operates to control the high pressure pump 22, and sets time to turn off the high pressure pump.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A seawater desalination device, comprising: a seawater introducing and filtering device and a seawater reverse osmosis filtering device; **characterized in that**
a first control valve is arranged between the seawater introducing and filtering device and the seawater reverse osmosis filtering device;
a second control valve is disposed at a terminal pipe of the seawater reverse osmosis filtering device; and
the seawater desalination device further comprises a control circuit.

2. The device of claim 1, **characterized in that**
the seawater introducing and filtering device comprises a seawater inlet valve, a seawater pump, and a filter assembly connected **in that** order via pipelines;
the seawater reverse osmosis filtering device comprises a first control valve, a high pressure pump, a reverse osmosis membrane assembly, a pressure regulating valve, a second control valve, and a purge water tank connected **in that** order via pipelines;
one end of the seawater inlet valve of the seawater introducing and filtering device is connected to a seawater inlet, and the other end of the seawater inlet valve is connected to the seawater pump; an outlet end of the seawater pump is connected to the filter assembly, and an outlet of the filter assembly is connected to the first control valve; and
the seawater after being filtered by the seawater introducing and filtering device is introduced to the high pressure pump via the first control valve, then to the reverse osmosis membrane assembly via a water inlet thereof for filtration; a freshwater produced from the filtration is discharged from a freshwater outlet of the reverse osmosis membrane assembly in two paths; one path of the freshwater passes through a freshwater outlet valve and is discharged for use, and the other path of the freshwater passes through a liquid level valve and reaches a purge water tank; a concentrated seawater produced from the filtration passes through the pressure regulating valve and discharged via the second control valve; and the purge water tank is connected to a water inlet of the high pressure pump.

3. The device of claim 1, **characterized in that** a first inlet of the first control valve communicates with an end of the seawater introducing and filtering device; a second inlet of the first control valve communicates with an output pipe of a purge water tank of the seawater reverse osmosis filtering device; and an outlet of the first control valve communicates with an inlet of a high pressure pump of the seawater reverse osmosis filtering device.

4. The device of claim 3, **characterized in that** the first control valve is formed by a first three-way solenoid valve; a first inlet of the first three-way solenoid valve communicates with the end of the seawater introducing and filtering device; a second inlet of the first three-way solenoid valve communicates with the output pipe of the purge water tank of the seawater reverse osmosis filtering device; and an outlet of the first three-way solenoid valve communicates with the inlet of the high pressure pump of the seawater reverse osmosis filtering device.

5. The device of claim 3, **characterized in that**
the first control valve is a first two-way integrated control valve formed by a water inlet valve and a purge valve; a first fluid channel is arranged in the water inlet valve, and a second fluid channel is arranged in the purge valve; the first fluid channel and the second fluid channel cooperate with a valve core rod by synchronous rotation; a contact is arranged on the valve core rod corresponding to a first contact switch and a second contact switch of different positions; the first contact switch and a switch of the high pressure pump are in electric connection and form a first electrifying switch circuit; and the second contact switch, a time controller, and the switch of the high pressure pump are in electric connection and form a second electrifying switch circuit; and
when rotating the valve core rod to a first set position, the first fluid channel is in an open state while the second fluid channel is in a closed state, and the contact triggers the first contact switch to connect the first electrifying switch circuit; and when rotating the valve core rod to a second set position, the second fluid channel is in the open state while the first fluid channel is in the closed state, and the contact triggers the second contact switch to connect the second electrifying switch circuit.

6. The device of claim 1, **characterized in that** an inlet of the second control valve communicates with a pressure regulating valve of the seawater reverse osmosis filtering device; a first outlet of the second control valve communicates with a concentrated water outlet of the seawater reverse osmosis filtering device; and a second outlet of the second control valve communicates with an inlet of a purge water tank of the seawater reverse osmosis filtering device.

7. The device of claim 6, **characterized in that** the second control valve is a second three-way solenoid valve; an inlet of the second three-way solenoid valve communicates with the pressure regulating valve of the seawater reverse osmosis filtering device; a first outlet of the second three-way solenoid valve communicates with the concentrated water outlet of the seawater reverse osmosis filtering device; and a second outlet of the second three-way solenoid valve communicates with the inlet of the purge water tank of the seawater reverse osmosis filtering device.

8. The device of claim 6, **characterized in that**
the second control valve is a second two-way integrated control valve formed by a reflux valve and a water outlet valve; the reflux valve is arranged behind the pressure regulating valve and communicates with the purge water tank; a third fluid channel is arranged in the water outlet valve, and a fourth fluid channel is arranged in the reflux valve; the third fluid channel and the fourth fluid channel cooperate with a valve core rod by synchronous rotation; a contact is arranged on the valve core rod corresponding to a third contact switch and a fourth contact switch of different positions; the third contact switch, a time controller, and a switch of the high pressure pump are in electric connection and form a third electrifying switch circuit; and the fourth contact switch, the time controller, and the switch of the high pressure pump are in electric connection and form a fourth electrifying switch circuit; and
when rotating the valve core rod to a third set position, the third fluid channel is in an open state while the fourth fluid channel is in a closed state, and the contact triggers the third contact switch to connect the third electrifying switch circuit; and when rotating the valve core rod to a fourth set position, the fourth fluid channel is in the open state while the third fluid channel is in the closed state, and the contact triggers the fourth contact switch to connect the fourth electrifying switch circuit.

9. The device of any of claims 1-8, **characterized in that**
the first control valve and the second control valve are selected from one of the following combinations: 1) both the first control valve and the second control valve are electrically controlled three-way solenoid valves; 2) the first control valve is a manual two-position three-way valve, and the second valve is the electrically controlled three-way solenoid valve; 3) the first control valve is the electrically controlled three-way solenoid valve, and the second control valve is the manual two-position three-way valve; 4) both the first control valve and the second control valve are manual two-position three-way valves; 5) both the first control valve and the second control valve are pneumatically controlled two-position three-way valves; 6) the first control valve is the manual two-position three-way valve, and the second control valve is the pneumatically controlled two-position three-way valve; 7) the first control valve is the pneumatically controlled two-position three-way valve, and the second control valve is the manual two-position three-way valve; 8) the first control valve is the electrically controlled three-way solenoid valve, and the second control valve is the pneumatically controlled two-position three-way valve; 9) the first control valve is the pneumatically controlled two-position three-way valve, and the second control valve is the electrically controlled two-position three-way solenoid valve; 10) the first control valve is a manual type first two-way control valve formed by the water inlet valve and the purge valve, and the second control valve is the electrically controlled three-way solenoid valve; 11) the first control valve is the electrically controlled three-way solenoid valve, and the second control valve is a manual type second two-way control valve formed by the water outlet valve and the reflux valve communicating with the purge water tank; 12) the first control valve is the manual type first two-way control valve formed by the water inlet valve and the purge valve, and the second control valve is the manual two-position three-way valve; 13) the first control valve is the manual two-position three-way valve, and the second control valve is the manual type second two-way control valve formed by the water outlet valve and the reflux valve communicating with the purge water tank; 14) the first control valve is the manual type first two-way control valve formed by the water inlet valve and the purge valve, and the second control valve is the pneumatically controlled two-position three-way valve; 15) the first control valve is the pneumatically controlled two-position three-way valve, and the second control valve is the manual type second two-way control valve formed by the water outlet valve and the reflux valve communicating with the purge water tank.

10. The device of claim 4 or 7, **characterized in that** the control circuit comprises: the first control valve, the second control valve, the high pressure pump, and an off-delay controller or a programmable logic controller (PLC) connected in parallel.

11. The device of claim 5 or 8, **characterized in that** the control circuit is a switch circuit formed by the first electrifying switch circuit, the second electrifying switch circuit, the third electrifying switch circuit, and the fourth electrifying switch circuit connected in parallel.

12. The device of claim 5 or 8, **characterized in that** the time controller is a time relay or a microcontroller unit (MCU).

13. A seawater desalination device, comprising: a seawater introducing and filtering device and a seawater reverse osmosis filtering device; the seawater introducing and filtering device comprising a seawater inlet valve, a seawater pump, and a precise filter assembly connected in that order via pipelines; the seawater reverse osmosis filtering device comprising a first controller, a high pressure pump, a reverse osmosis membrane assembly, a pressure regulating valve, a second control valve, and a purge water tank connected in that order via pipelines; **characterized in that**
the first control valve arranged between the seawater introducing and filtering device and the seawater reverse osmosis filtering device is a first three-way solenoid valve; a first inlet of the first three-way solenoid valve communicates with an end of the seawater introducing and filtering device; a second inlet of the first three-way solenoid valve communicates with an output pipe of the purge water tank of the seawater reverse osmosis filtering device; an outlet of the first three-way solenoid valve communicates with an inlet of a high pressure pump of the seawater reverse osmosis filtering device; and the seawater desalination device further comprises a control circuit.

14. The device of claim 13, **characterized in that** the second control valve arranged on a pipe behind the pressure regulating valve of the seawater reverse osmosis filtering device is a second three-way solenoid valve; an inlet of the second three-way solenoid valve communicates with the pressure regulating valve of the seawater reverse osmosis filtering device; a first outlet of the second three-way solenoid valve communicates with the concentrated water outlet of the seawater reverse osmosis filtering device; and a second outlet of the second three-way solenoid valve communicates with an inlet of the purge water tank of the seawater reverse osmosis filtering device.

15. A seawater desalination device, comprising: a seawater introducing and filtering device and a seawater reverse osmosis filtering device; the seawater introducing and filtering device comprising a seawater inlet valve, a seawater pump, and a precise filter assembly connected in that order via pipelines; the seawater reverse osmosis filtering device comprising a first controller, a high pressure pump, a reverse osmosis membrane assembly, a pressure regulating valve, a second control valve, and a purge water tank connected in that order via pipelines; **characterized in that**
the second control valve arranged on a pipe behind the pressure regulating valve of the seawater reverse osmosis filtering device is a second three-way solenoid valve; an inlet of the second three-way solenoid valve communicates with the pressure regulating valve of the seawater reverse osmosis filtering device; a first outlet of the second three-way solenoid valve communicates with the concentrated water outlet of the seawater reverse osmosis filtering device; a second outlet of the second three-way solenoid valve communicates with an inlet of the purge water tank of the seawater reverse osmosis filtering device; and the seawater desalination device further comprises a control circuit.

16. The device of claim 15, **characterized in that** the first control valve arranged between the seawater introducing and filtering device and the seawater reverse osmosis filtering device is a first three-way solenoid valve; a first inlet of the first three-way solenoid valve communicates with an end of the seawater introducing and filtering device; a second inlet of the first three-way solenoid valve communicates with an output pipe of the purge water tank of the seawater reverse osmosis filtering device; an outlet of the first three-way solenoid valve communicates with an inlet of a high pressure pump of the seawater reverse osmosis filtering device.

17. A method for desalinating seawater using the seawater desalination device of claim 1, **characterized in that** the method comprising the following steps:
1) when desalinating the seawater, rotating a valve core rod of a first two-way integrated control valve to a first set position to make a first fluid channel in an open state and a second fluid channel synchronously in a closed state, whereby allowing a contact to trigger a first contact switch to connect a first electrifying switch circuit;
2) continuously pumping the seawater by a high pressure pump to a reverse osmosis membrane assembly for preparing freshwater, discharging the prepared freshwater from a freshwater outlet of the reverse osmosis membrane assembly in two paths, and allowing one path of the freshwater to pass through a freshwater outlet valve and then discharging the path of the freshwater for use, and allowing the other path of the freshwater to pass through a liquid level valve and reach a purge water tank; and allowing a concentrated seawater produced from filtration to pass through a pressure regulating valve and discharging the concentrated seawater via a water outlet valve;
3) when the seawater desalination is finished and the seawater desalination device is to be stopped, rotating the valve core rod of the first two-way integrated control valve to a second set position to make the second fluid channel in the open state and the first fluid channel in the closed state, whereby allowing the contact to trigger a second contact switch to connect a second electrifying switch circuit; and
4) controlling a high pressure pump to operate for a set time by a time controller of the second electrifying switch circuit, during an operation process of the high pressure pump, introducing the freshwater of the purge water tank via the purge valve to the high pressure pump, pumping the freshwater to the reverse osmosis membrane assembly from the high pressure pump for replacing the seawater in the reverse osmosis membrane assembly, and discharging replaced seawater via the pressure regulating valve and the water outlet valve.

18. A method for cleaning the seawater desalination device of claim 1, **characterized in that**
1) when the reverse osmosis membrane assembly is to be washed, adding a detergent to a purge water tank, disconnecting a first three-way solenoid valve, rotating a valve core rod of a first two-way integrated control valve to a second set position to make a second fluid channel in an open state and a first fluid channel in a closed state; in the meanwhile, rotating a valve core rod of a second two-way integrated control valve to a fourth set position to make the fourth fluid channel in the open state and the third fluid channel in the closed state and to trigger a fourth contact switch to connect a fourth electrifying switch circuit by a contact;
2) controlling the high pressure pump to operate for a set time by a time controller of the fourth electrifying switch circuit, during which, introducing the detergent of the purge water tank to the high pressure pump via a purge valve, pumping the detergent by the high pressure pump to the reverse osmosis membrane assembly for washing the reverse osmosis membrane assembly, and refluxing the detergent from the reverse osmosis membrane assembly to the purge tank, thus realizing repeated cycles of washing of the reverse osmosis membrane assembly;
3) when the set time of the time controller in the fourth electrifying switch circuit is reached, rotating the valve core rod of the second two-way integrated control valve to a third set position to make the third fluid channel in the open state and the fourth fluid channel in the closed state and to trigger a third contact switch to connect a third electrifying switch circuit by a contact; and
4) controlling the high pressure pump to operate for a set time by the time controller of the third electrifying switch circuit, during which, introducing the detergent of the purge water tank to the high pressure pump via a purge valve, pumping the detergent by the high pressure pump to the reverse osmosis membrane assembly, and discharging the detergent via the pressure regulating valve and a water outlet valve.

19. A method for desalinating seawater using the seawater desalination device of claim 1, **characterized in that** the method is applied in normal operation and an off-state of a desalination device and the method comprises the following steps:
1) when desalinating the seawater, starting a first three-way solenoid valve to make a first inlet channel in an open state and a second inlet channel synchronously in a closed state, whereby allowing the seawater to pass through the first inlet channel to a high pressure pump; in the meanwhile, making the second three-way solenoid valve in a halt state, and making a first outlet channel of the second three-way solenoid valve in an open state and a second outlet channel thereof in a closed state;
2) starting the high pressure pump, continuously pumping the seawater by the high pressure pump to a reverse osmosis membrane assembly to prepare freshwater; discharging the prepared freshwater from a freshwater outlet of the reverse osmosis membrane assembly in two paths, and allowing one path of the freshwater to pass through a freshwater outlet valve and then discharging the path of the freshwater for use, and allowing the other path of the freshwater to pass through a liquid level valve and reach a purge water tank; and allowing a concentrated seawater produced from filtration to pass through a pressure regulating valve and discharging the concentrated seawater via the first outlet channel of the second three-way solenoid valve and a concentrated water outlet;
3) when the seawater desalination is finished and the seawater desalination device is to be stopped, disconnecting the first three-way solenoid valve and at the same time allowing a time controller to operate, and allowing the second inlet channel to be in the open state and the first inlet channel to be in the closed state, and introducing the freshwater in the purge water tank via the second inlet channel to the high pressure pump; and operating the high pressure pump for a set time under the control of the time controller; and
4) pumping the freshwater from the purge water tank to the reverse osmosis membrane assembly by the high pressure pump, replacing the seawater in the reverse osmosis membrane assembly, and discharging replaced seawater via the pressure regulating valve, the first outlet channel of the second three-way solenoid valve, and the concentrated water outlet.

20. A method for cleaning the seawater desalination device of claim 1, **characterized in that** the method comprises the following steps:
1) when the reverse osmosis membrane assembly is to be washed, adding a detergent to a purge water tank, disconnecting a first three-way solenoid valve, opening a second inlet channel and allowing the detergent of the purge water tank to flows to a high pressure pump, and closing a first inlet channel for preventing the seawater from inside; in the meanwhile, connecting a second three-way solenoid valve and starting the high pressure pump and a time controller, opening a second outlet channel of the second three-way solenoid valve and closing a first outlet channel for preventing the detergent from discharging;
2) pumping the detergent of the purge water tank to the reverse osmosis membrane assembly by the high pressure pump, allowing the detergent to pass through a pressure regulating valve and the second outlet channel of the second three-way solenoid valve to enter the purge water tank and the second inlet channel of the first three-way solenoid valve respectively to return to the high pressure pump, thus realizing repeated cycles of washing of the reverse osmosis membrane assembly; and
3) disconnecting the second three-way solenoid valve at a set time by the time controller, closing the second outlet of the second three-way solenoid valve, stopping the cycles of washing, and discharging the detergent from a concentrated water outlet via the first outlet channel of the second three-way solenoid valve; and stopping operation of the high pressure pump at a set time by the time controller.
